Europäisches Patentamt

European Patent Office

Office européen des brevets

(19)

(11) **EP 0 854 082 B1**

(12) **FASCICULE DE BREVET EUROPEEN**

(45) Date de publication et mention
de la délivrance du brevet:
**17.03.2004 Bulletin 2004/12**

(51) Int Cl.⁷: $B64G\ 1/10$, B64G 1/24

(21) Numéro de dépôt: **97403109.8**

(22) Date de dépôt: **22.12.1997**

(54) **Procédé de lancement de satellites sur des orbites non coplanaires en utilisant l'assistance gravitationnelle lunaire**

Verfahren um Satelliten in nicht-koplanaren Umlaufbahnen mit Hilfe der Mondschwerkraft zu bringen

Method for launching satellites into non-coplanar orbits using lunar gravitational assistance

(84) Etats contractants désignés:
**DE GB**

(30) Priorité: **31.12.1996 FR 9616275**

(43) Date de publication de la demande:
**22.07.1998 Bulletin 1998/30**

(73) Titulaire: **SOCIETE NATIONALE D'ETUDE ET DE CONSTRUCTION DE MOTEURS D'AVIATION -Snecma
F-75015 Paris (FR)**

(72) Inventeurs:
• **Koppel, Christophe
  77176 Nandy (FR)**
• **Valentian, Dominique
  78710 Rosny (FR)**

(74) Mandataire: **Thévenet, Jean-Bruno et al
Cabinet Beau de Loménie
158, rue de l'Université
75340 Paris Cédex 07 (FR)**

(56) Documents cités:
   **EP-A- 0 409 721           US-A- 5 158 249
   US-A- 5 393 017**

• **ATZEI ET AL.: "SOHO AND CLUSTER: EUROPE'S POSSIBLE CONTRIBUTION TO THE ISTP" ESA BULLETIN, no. 41, février 1985, PARIS, FRANCE, pages 21-28, XP002041728**

EP 0 854 082 B1

## Description

Domaine de l'invention

La présente invention a pour objet un procédé et un système de lancement simultané de satellites sur des orbites non coplanaires, selon lequel on dispose un premier satellite sur un lanceur adapté pour placer pratiquement directement ledit premier satellite sur une première orbite finale présentant des premiers paramètres orbitaux avec une première valeur d'excentricité, une première valeur d'inclinaison et une première valeur d'apogée et on dispose sur le lanceur au moins un deuxième satellite destiné à être placé sur une deuxième orbite finale présentant des deuxièmes paramètres orbitaux avec une deuxième valeur d'excentricité, une deuxième valeur d'inclinaison et une deuxième valeur d'apogée qui sont substantiellement différentes des valeurs correspondantes des premiers paramètres orbitaux fournis par le lanceur et appliqués au premier satellite lancé simultanément avec le deuxième satellite, selon le préambule de la revendication 1.

Art antérieur

Les lancements doubles ou multiples de satellites sont généralement effectués sur des orbites coplanaires et d'excentricités voisines.

Dans quelques cas, tels que le deuxième lancement du lanceur H-2, on procède à un réallumage du dernier étage du lanceur pour placer un deuxième satellite en orbite de transfert géostationnaire, après avoir placé, avant le réallumage de ce dernier étage du lanceur, un premier satellite en orbite circulaire basse. Dans ce cas, les orbites des deux satellites disposés sur le même lanceur restent cependant pratiquement coplanaires.

Or, il existe une demande importante pour placer des satellites sur des orbites non coplanaires, en particulier pour placer un premier satellite sur une orbite circulaire basse inclinée, de préférence polaire, et un deuxième satellite sur une orbite géostationnaire, ou encore pour placer plusieurs satellites sur des orbites d'inclinaisons très différentes ($0°$, $55°$ et $65°$ par exemple).

En pratique, on a jusqu'à présent renoncé à effectuer de telles missions car le coût pour effectuer de façon classique des changements d'inclinaison de la trajectoire d'un satellite en orbite basse est prohibitif. A titre d'exemple, si l'on veut faire passer un satellite d'une orbite polaire héliosynchrone à une orbite équatoriale circulaire basse, l'incrément de vitesse nécessaire au niveau du satellite est de 11 km/s, ce qui est aussi important que par exemple pour lancer une sonde sur une orbite lunaire.

Dans un article intitulé "Soho and Cluster: Europe's Possible Contribution to the ISTP", de A. Atzei, J. Ellwood et G. Whitcomb, paru dans ESA Bulletin, N° 41, février 1985, Paris, il est mentionné l'étude d'une mission "cluster" selon laquelle quatre satellites artificiels seraient lancés simultanément et mis en orbite autour de la Terre avec des orbites polaires fortement elliptiques présentant des inclinaisons différentes et modifiées de façon périodique pour obtenir des distances variables entre les quatre satellites. Il est à noter que dans ce cas les changements d'orbite sont effectués exclusivement à l'aide des systèmes de propulsion embarqués sur les satellites.

Il est par ailleurs bien connu d'utiliser l'assistance gravitationnelle pour changer l'inclinaison ou les autres paramètres orbitaux d'une orbite, dans le cas de missions interplanétaires.

Ainsi, dans les missions APOLLO, il a été mis en oeuvre des trajectoires dites de retour assuré, qui utilisent la réaction de gravitation lunaire.

Pour les sondes PIONEER 10 et 11, il a été utilisé une réaction de gravitation des planètes Jupiter et Saturne.

Avec la sonde ULYSSES, on a utilisé la réaction de gravitation de Jupiter pour obtenir une orbite solaire polaire, tandis qu'avec la sonde GAULEO, les réactions de gravitation de Vénus et de la Terre ont été utilisées pour atteindre Jupiter.

Ainsi, l'assistance gravitationnelle a été essentiellement utilisée pour les sondes spatiales interplanétaires dont le vecteur vitesse voit sa direction et son intensité modifiées, sans apport d'énergie significatif par une séquence de propulsion, par le simple passage au voisinage d'une planète qui, caractérisée par une masse et une vitesse de déplacement, assure un phénomène d'attraction sur la sonde spatiale et lui permet ainsi de présenter une nouvelle trajectoire.

Objet et description succincte de l'invention

L'invention vise à permettre de réaliser de façon économique le lancement simultané de satellites destinés à être placés sur des orbites non coplanaires.

L'invention vise plus particulièrement à minimiser l'énergie utilisée par les systèmes de propulsion disposés sur les satellites à placer en orbite et qui n'ont pas été placés sur une orbite proche de leur orbite finale directement par le lanceur sur lequel sont disposés les satellites.

Ces buts sont atteints grâce à un procédé de lancement simultané de satellites sur des orbites non coplanaires, selon lequel on dispose un premier satellite sur un lanceur adapté pour placer pratiquement directement ledit premier satellite sur une première orbite finale présentant des premiers paramètres orbitaux avec une première valeur d'excentricité, une première valeur d'inclinaison et une première valeur d'apogée et on dispose sur le lanceur au moins un deuxième satellite destiné à être placé sur une deuxième orbite finale présentant des deuxièmes paramètres orbitaux avec une deuxième valeur d'excentricité, une deuxième valeur d'inclinaison et une deuxième valeur d'apogée qui sont substantiellement différentes des valeurs correspondantes des premiers paramètres orbitaux fournis par le lanceur et appliqués au premier satellite lancé simultanément avec le deuxième satellite, caractérisé en ce que pour la mise en place du deuxième satellite, on procède au cours d'une première manoeuvre à un transfert du deuxième satellite sur une orbite d'attente fortement elliptique, dont l'apogée est situé typiquement entre 50 000 km et 400 000 km, dont le demi-grand axe est orienté de manière à intercepter le tore formé par la sphère d'influence de la lune sur son orbite, et dont la période $T_A$ est calculée selon la formule :

$$nT_A + 0{,}5 \cdot T_{LTO} = t_{pl},$$

avec n entier $\leq 4$.
où $T_{LTO}$ est la période de l'orbite de transfert lunaire, $t_{pl}$ est le temps entre la fin du lancement et le passage de la lune au point visé, et n est le nombre de fois, inférieur à 4, que l'orbite d'attente fortement elliptique est parcourue par le deuxième satellite, on procède au cours d'une deuxième manoeuvre au périgée de ladite orbite fortement elliptique à un transfert du deuxième satellite sur l'orbite de transfert lunaire, on procède au cours d'une troisième manoeuvre à une correction à mi-course destinée à fixer précisément les paramètres d'entrée dans la sphère d'influence de la lune, lesdits paramètres d'entrée étant déterminés de telle manière qu'au cours d'une quatrième manoeuvre, des changements d'altitude du périgée et d'inclinaison d'une orbite intermédiaire sur laquelle se trouve le deuxième satellite et visant à se rapprocher de ladite deuxième orbite finale soient obtenus majoritairement par réaction de gravitation dans la sphère d'influence de la lune, et on procède à une cinquième manoeuvre permettant de placer avec précision le deuxième satellite sur la deuxième orbite finale.

Selon une première application possible, ladite première orbite finale sur laquelle est lancé le premier satellite est constituée par une orbite basse altitude inclinée telle qu'une orbite héliosynchrone, et ladite cinquième manoeuvre est effectuée au périgée de l'orbite intermédiaire du deuxième satellite en sortie de la sphère d'influence de la lune et consiste à abaisser l'apogée ou à circulariser ladite orbite intermédiaire en vue de transformer ladite orbite intermédiaire en ladite deuxième orbite finale constituée par une orbite géostationnaire.

Selon une deuxième application possible, ladite première orbite finale sur laquelle est lancé le premier satellite est constituée par une orbite de transfert géostationnaire faiblement inclinée, ou orbite de transfert supergéostationnaire (cette première orbite finale n'étant alors pas l'orbite nominale de ce premier satellite) et au cours de ladite troisième manoeuvre, la correction à mi-course est telle que les paramètres d'entrée dans la sphère d'influence de la lune permettent qu'après la réaction de gravitation dans la sphère d'influence de la lune, le périgée de l'orbite intermédiaire sur laquelle se trouve le deuxième satellite soit situé à une altitude de 80 à 170 km, et la cinquième manoeuvre consiste, l'altitude du périgée étant fixée, à effectuer au moins un freinage atmosphérique pour abaisser l'apogée de l'orbite intermédiaire du deuxième satellite en sortie de la sphère d'influence de la lune, puis, par une manoeuvre à l'apogée, à relever le périgée de manière à transformer ladite orbite intermédiaire en ladite deuxième orbite finale constituée par une orbite basse altitude inclinée ou une orbite circulaire basse inclinée.

Selon encore une troisième application possible, l'invention du type décrit plus haut, concerne un procédé pour le lancement simultané d'une pluralité de deuxièmes satellites sur des orbites finales constituées par des orbites à basses altitudes, notamment des orbites circulaires basses d'inclinaisons différentes tandis que le premier satellite est placé sur une première orbite finale constituée par une orbite de transfert géostationnaire faiblement inclinée, ou une orbite de transfert super géostationnaire, caractérisé en ce qu'au cours de la troisième manoeuvre, on procède à une série de corrections à mi-course différentes pour placer les différents deuxièmes satellites sur des points d'entrée différents dans la sphère d'influence lunaire, de façon à viser des inclinaisons différentes et par suite obtenir lors de la cinquième manoeuvre, après freinage atmosphérique, une série d'orbites à basses altitudes notamment des orbites circulaires basses d'inclinaisons différentes pour les différents satellites de la pluralité de deuxièmes satellites.

L'invention concerne également, selon une première variante, un procédé du type mentionné plus haut, caractérisé en ce que le deuxième satellite est équipé d'un calculateur de bord et d'un système de propulsion chimique comprenant un propulseur principal embarqué à bord dudit deuxième satellite et des propulseurs de contrôle d'attitude.

Selon une caractéristique particulière, ledit deuxième satellite comprend un senseur d'astre, un senseur terrestre à champ variable et un tableau d'éphémérides inclus dans le calculateur de bord permettant de calculer les angles entre le vecteur poussée et les directions terre-satellite et soleil-satellite, et donc de déterminer l'attitude du deuxième satellite au cours des manoeuvres.

Le deuxième satellite peut en outre comprendre des gyromètres contrôlant les propulseurs de contrôle d'attitude qui assurent la rotation du corps du deuxième satellite pour orienter le propulseur principal dans la direction visée.

L'invention concerne encore, selon une deuxième variante, un procédé du type décrit plus haut, caractérisé en ce que le deuxième satellite est équipé d'un calculateur de bord et en outre d'un système de propulsion électrique comprenant au moins des propulseurs électriques à forte impulsion spécifique embarqués à bord dudit deuxième satellite, les propulseurs électriques pouvant être du type ionique, arc jet ou à dérive fermée d'électrons.

Selon un mode particulier de réalisation, le deuxième satellite comprend un senseur d'horizon terrestre à champ variable pour obtenir la position de la Terre et des roues de réaction ou des roues cinétiques pour assurer l'attitude de ce deuxième satellite et le calculateur de bord met en oeuvre une loi de pilotage des propulseurs électriques qui consiste par exemple à stabiliser le vecteur poussée perpendiculaire à la direction terre-satellite.

Selon un autre mode particulier de réalisation, le deuxième satellite comprend un senseur d'astre ainsi qu'une table d'éphémérides incluse dans le calculateur de bord pour déterminer l'attitude de ce deuxième satellite et des roues de réaction pour assurer l'attitude de ce deuxième satellite et le calculateur de bord met en oeuvre une loi de pilotage des propulseurs électriques qui consiste à pointer le vecteur poussée selon une direction inertielle.

Avantageusement, le corps du deuxième satellite est muni d'au moins deux rétro-réflecteurs laser permettant d'obtenir de manière très précise par télémétrie laser la position de ce deuxième satellite avant les manoeuvres de correction à mi-course de la troisième manoeuvre.

Un système de propulsion chimique et un système de propulsion électrique peuvent être installés sur un même satellite.

Brève description des dessins

D'autres caractéristiques et avantages de l'invention ressortiront de la description suivante de modes particuliers de réalisation de l'invention, donnés à titre d'exemples, en référence aux dessins annexés, sur lesquels :

- la figure 1A est un diagramme montrant la composition des vitesses donnant le vecteur vitesse d'un satellite dans des coordonnées lunaires à l'entrée dans la sphère d'influence de la lune et la composition des vitesses donnant le vecteur vitesse du même satellite dans les coordonnées terrestres à la sortie de la sphère d'influence de la lune,
- les figures 1B, 1C et 1D sont des diagrammes montrant quelques exemples de trajectoires possibles d'un satellite dans et en-dehors de la sphère d'influence de la lune,
- la figure 2 est un schéma illustrant un exemple de procédé selon l'invention pour la mise en place d'un premier satellite sur une orbite héliosynchrone et la mise en place d'un deuxième satellite transféré de cette orbite héliosynchrone à une orbite géostationnaire,
- la figure 3 est un schéma illustrant un autre exemple de procédé selon l'invention pour la mise en place d'un premier satellite sur une orbite géostationnaire et la mise en place d'un deuxième satellite transféré de cette orbite géostationnaire à une orbite héliosynchrone, et
- la figure 4 est une vue schématique d'un exemple de configuration de système de bord d'un satellite adapté pour faire l'objet d'un transfert d'orbite selon le procédé conforme à l'invention.

Description détaillée de modes particuliers de réalisation de l'invention

On se référera tout d'abord à la figure 1A qui représente la lune 31 avec sa sphère d'influence 30 de rayon $R_S$, un point d'entrée 37 dans cette sphère d'influence 30 d'un satellite placé sur une orbite de transfert lunaire (LTO) et un point de sortie 38 de ce satellite hors de cette sphère d'influence 30. La référence 32 désigne le vecteur vitesse de la lune $u_m$.

A l'entrée 37 dans la sphère d'influence 30, le vecteur vitesse 32 de la lune se compose avec le vecteur vitesse u 33 du satellite référé à la terre, pour donner le vecteur vitesse v 34 du satellite dans les coordonnées lunaires. La référence 39 désigne la limite sphérique prise en compte pour la composition des vecteurs 32, 33, 34.

A la sortie 38 de la sphère d'influence 30, le vecteur vitesse 32 de la lune se compose avec le vecteur vitesse v 36 du satellite référé à la lune, pour donner le vecteur vitesse du satellite u 35 dans les coordonnées terrestres. La référence 40 désigne la limite sphérique prise en compte pour la composition des vecteurs 32, 35, 36.

En fonction du point d'entrée 37 du satellite dans la sphère d'influence lunaire 30, il est ainsi possible de déterminer les caractéristiques du vecteur vitesse 35 du satellite à la sortie 38 de la sphère d'influence lunaire 30, et par suite de déterminer la variation d'inclinaison produite sur l'orbite du satellite, ainsi que les variations des autres paramètres orbitaux. Des méthodes numériques d'intégration de l'équation fondamentale de la dynamique permettent de déterminer ces caractéristiques de façon précise.

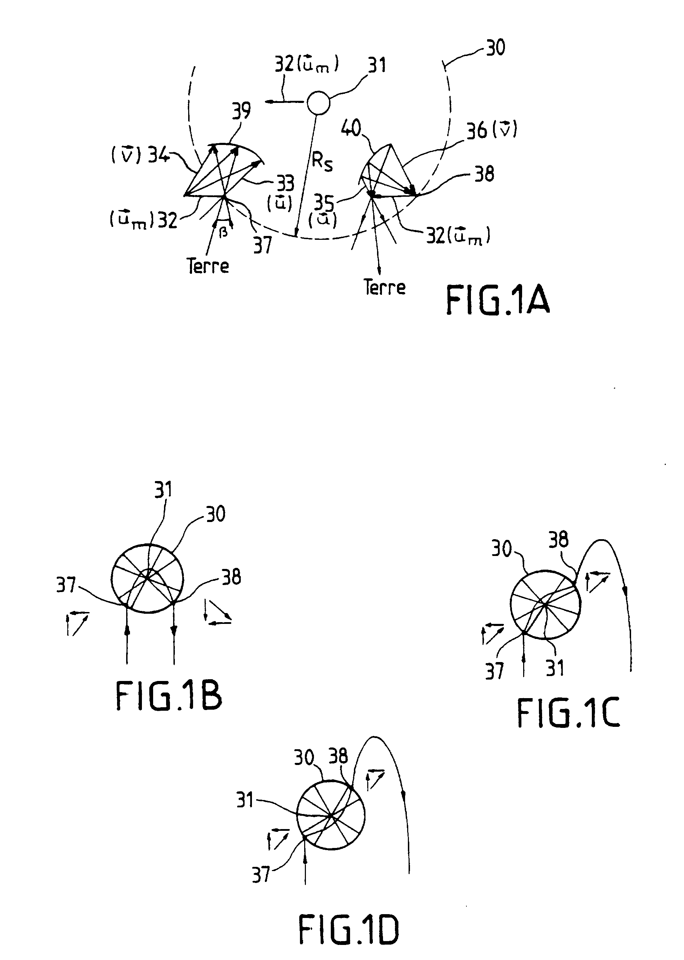

Les figures 1B, 1C et 1D montrent trois exemples de trajectoires d'un satellite placé sur une orbite de transfert lunaire et pénétrant dans la sphère d'influence 30 de la lune 31. On voit sur la figure 1B, une trajectoire du satellite très serrée autour de la lune tandis que les figures 1C et 1D montrent des exemples de trajectoires plus lâches faisant apparaître un apogée en dehors de la sphère d'influence 30 de la lune 31.

Les figures 1A à 1D visent ainsi à expliciter une mesure qui est mise en oeuvre dans le procédé selon l'invention, selon laquelle une assistance gravitationnelle peut être obtenue lors du lancement d'un satellite, si celui-ci est placé sur une orbite de transfert lunaire (LTO), l'inclinaison de cette orbite pouvant être choisie en fonction du point d'entrée dans la sphère d'influence de la lune.

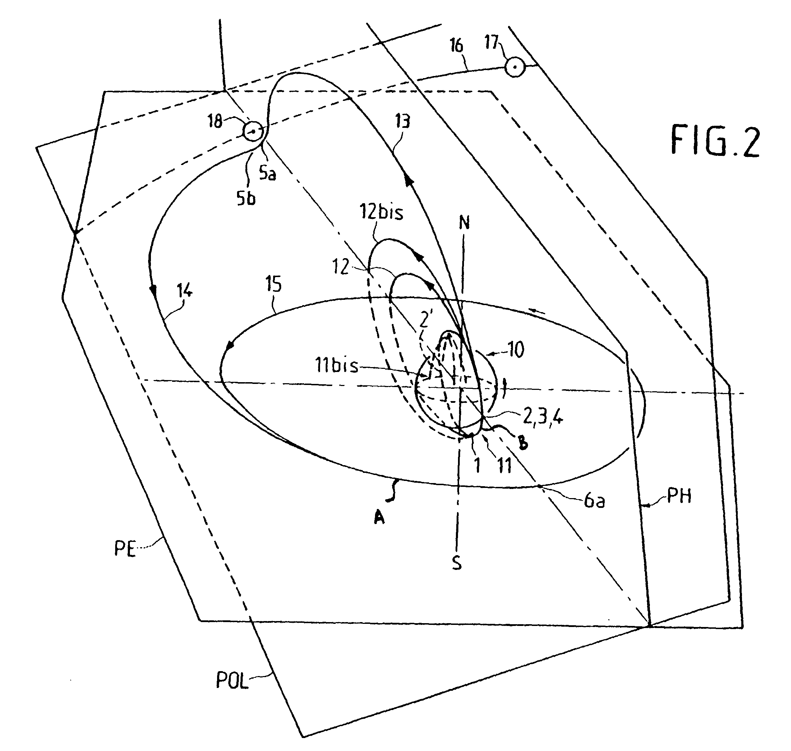

Un premier exemple de mise en oeuvre du procédé selon l'invention sera décrit en référence à la figure 2.

Deux satellites A et B sont installés sur un même lanceur adapté pour placer ces satellites A et B sur une orbite héliosynchrone 11 autour de la terre 10.

Le premier satellite B est libéré au point 1 sur l'orbite héliosynchrone 11. Si nécessaire, on peut laisser dériver par précession naturelle le satellite B sur une orbite d'attente 11bis. Le satellite B est ainsi positionné d'emblée par le lanceur sur une orbite circulaire inclinée qui correspond à l'orbite finale recherchée ou n'implique pas d'énergie importante pour être transformée en l'orbite nominale recherchée.

Le deuxième satellite A peut être lié à l'étage supérieur du lanceur. Au passage du lanceur à l'une (2) des deux intersections 2, 2' avec le plan de l'orbite lunaire POL, le lanceur fournit au satellite A une impulsion qui met le satellite A sur une orbite elliptique 12. Le satellite A est au même moment séparé de l'étage supérieur du lanceur. Un propulseur principal du satellite, tel qu'un propulseur chimique, est mis à feu lorsque le satellite revient au voisinage d'un point 3 qui correspond au point 2 et constitue le périgée de l'orbite elliptique 12, de manière à mettre le satellite A sur une orbite d'attente 12bis de période $T_A$ qui sera définie plus loin, alors que la lune est elle-même en une position 17 sur son orbite 16. Le propulseur principal du satellite A est mis à feu une deuxième fois au voisinage d'un point 4 à l'intersection de l'orbite d'attente 12bis avec le plan de l'orbite lunaire, qui constitue le périgée de l'orbite d'attente 12bis, ce qui place le satellite A sur l'orbite de transfert lunaire 13. Lorsque le satellite A est à l'apogée de son orbite de transfert lunaire 13, il subit dans la zone 5a la réaction de gravitation de la lune qui est parvenue en position 18. Cette réaction de gravitation, associée éventuellement à une impulsion de correction provoquée par le système propulsif du satellite A dans une zone 5b, crée un incrément de vitesse principalement hors du plan orbital et provoque le transfert du satellite A sur une orbite LTO 14 située dans le plan équatorial PE. Le périgée de cette orbite 14 est situé au point 6a à une altitude voisine de 36 000 km. Une impulsion de freinage peut alors facilement être appliquée au satellite A au point 6a, à l'aide de son moteur principal, pour provoquer une réduction d'altitude de l'apogée et le transfert de ce satellite A sur l'orbite géostationnaire (GSO) 15. L'altitude de l'apogée du satellite A peut être réduite jusqu'à l'obtention de l'orbite géostationnaire 15, soit par une impulsion de freinage provoquée par le système de propulsion chimique du satellite A au périgée 6a, soit par un freinage continu à l'aide d'un système de propulsion électrique du satellite A avec une loi d'orientation de vecteur poussée convenable.

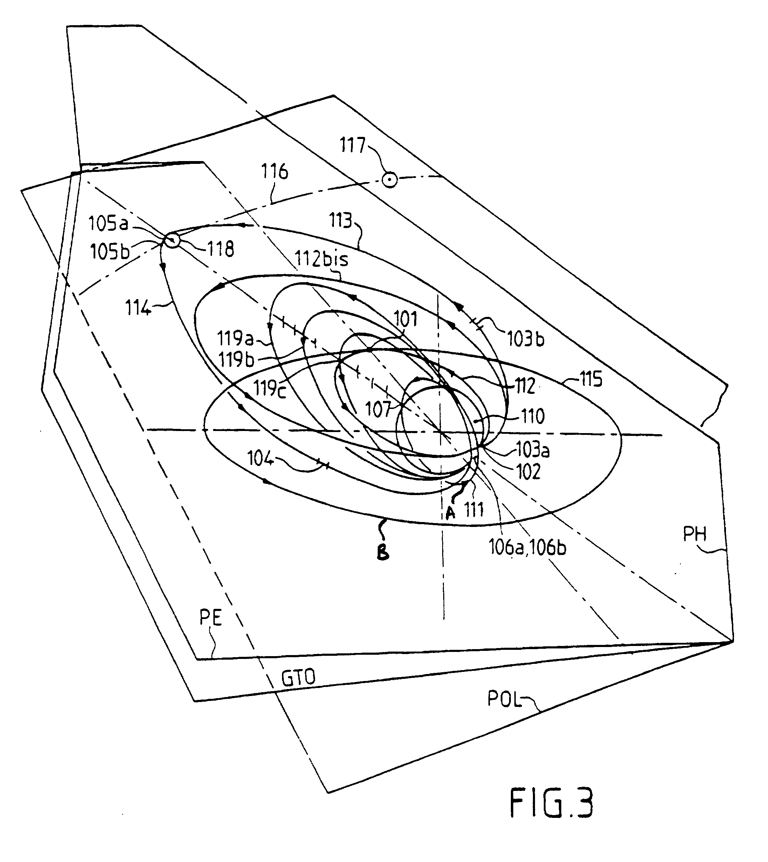

On décrira en référence à la figure 3 un autre exemple de mise en oeuvre du procédé selon l'invention, selon lequel deux satellites A et B sont disposés sur un même lanceur adapté pour placer les satellites sur une orbite de transfert géostationnaire 112 autour de la terre 110. Le satellite B est libéré en un point de cette orbite pour être ultérieurement par ses propres moyens placé au voisinage du point 101 sur une orbite géostationnaire 115. Le satellite A, qui peut être lié à l'étage supérieur du lanceur reçoit de la part du lanceur, lors du passage au périgée 102, une impulsion mettant le satellite sur une orbite elliptique d'attente 112bis de période $T_A$ qui sera définie plus loin. Selon une variante de réalisation, le satellite A est simplement séparé du lanceur et un système de propulsion principal du satellite A, du type chimique est mis à feu dans la zone 103. L'impulsion fournie par le propulseur du satellite place alors ce dernier sur l'orbite d'attente 112bis. La lune est alors en position 117 sur son orbite 116. Le propulseur principal du satellite A est mis à feu une première fois, respectivement une deuxième fois, au périgée, ce qui place le satellite A sur l'orbite de transfert lunaire 113.

Le satellite A peut subir une correction à mi-course dans la zone 103b pour affiner les paramètres d'entrée dans la sphère d'influence de la lune.

Lorsque le satellite A est à l'apogée, il subit, dans la zone 105a, la réaction de gravitation de la lune qui est arrivée en position 118. Cette réaction de gravitation est associée éventuellement à une impulsion de correction 105b qui transfère le satellite A sur une orbite LTO 114 située dans le plan héliosynchrone PH, ou le plan d'une autre orbite circulaire basse visée. Le périgée de cette orbite est situé à une altitude comprise entre 80 et 170 km. Afin d'affiner l'altitude du périgée, il peut être nécessaire d'effectuer une correction à mi-course dans la zone 104.

On laisse ensuite les passages successifs au périgée 106a, 106b, diminuer les apogées de l'orbite considérée 119a, 119b, 119c, jusqu'à l'obtention d'une orbite dont l'apogée est inférieur typiquement à 1 000 km. Dans une manoeuvre terminale, le système propulsif du satellite A fournit une impulsion à l'apogée 107 pour circulariser l'orbite 111 qui peut être héliosynchrone ou inclinée.

Ainsi, selon le mode de réalisation décrit en référence à la figure 3, le premier satellite B est placé en orbite de transfert 112 faiblement inclinée tandis que le deuxième satellite A est placé sur une orbite de transfert très excentrique 112bis, voire directement sur une orbite LTO 113 de même inclinaison.

Les paramètres d'entrée dans la sphère d'influence lunaire sont choisis de manière à permettre le changement d'inclinaison de l'orbite du satellite A, et la modification convenable de l'altitude du périgée, par réaction de gravitation. Une petite correction de trajectoire permet de diminuer légèrement l'altitude du périgée.

L'apogée est réduit par passages successifs dans la haute atmosphère et l'orbite est circularisée par une impulsion provoquée par exemple par un propulseur chimique du satellite A.

Selon une caractéristique importante de l'invention, quel que soit le mode de réalisation considéré, il est réalisé une harmonisation des contraintes de mécanique céleste et de lancement.

Ainsi, pour bénéficier de l'assistance gravitationnelle lunaire pour effectuer un changement d'inclinaison, il faut réunir deux conditions :

- la lune doit se situer à proximité de l'intersection des plans orbitaux de l'orbite initiale et de l'orbite visée,
- le passage du satellite doit être synchronisé avec celui de la lune.

Si l'on considère la condition d'intersection des plans orbitaux, on peut constater que le plan de l'orbite lunaire est incliné de 5° sur le plan de l'écliptique, tandis que le plan équatorial (plan de l'orbite géostationnaire) est lui-même incliné de 23° 30' sur le plan de l'écliptique. En outre, les intersections des trois plans que sont le plan lunaire, le plan orbital initial et le plan orbital final, ne coïncident pas en général.

Fort heureusement, il n'est pas nécessaire de viser rigoureusement l'intersection du plan équatorial et du plan de l'orbite lunaire. En effet, une inclinaison résiduelle de quelques degrés est acceptable, car elle peut être annulée par une impulsion de correction à l'apogée ou au noeud. Cela correspond à une fenêtre d'ascension droite de quelques dizaines de degrés.

Selon l'invention, on impose donc simplement que le demi-grand axe de l'orbite de départ soit à quelques dizaines de degrés du point idéal visé.

En ce qui concerne la condition de synchronisation du passage du satellite avec la lune, on peut noter que le temps nécessaire pour décrire une demi-orbite LTO est de l'ordre de 7 jours. Cela signifie qu'en théorie le satellite devrait être injecté sur cette orbite 7 jours avant le survol de la lune et dans la région convenable de l'espace (au voisinage de l'intersection du plan orbital initial et de l'orbite lunaire). Une telle condition introduirait des contraintes inadmissibles sur la date et l'heure du lancement commun.

Aussi, l'une des caractéristiques essentielles de l'invention est d'introduire l'utilisation d'une orbite d'attente très elliptique dont la période $T_A$ est choisie de manière que :

$$nT_A + 1/2T_{LTO} = t_{pl}$$

(n entier $\leq$ 4)

où $t_{pl}$ : temps entre l'instant de mise à feu et le passage de la lune à proximité du plan équatorial terrestre
$T_{LTO}$ : période de l'orbite de transfert LTO.
n : nombre de fois que l'orbite d'attente très elliptique est parcourue par le satellite.

Il est ainsi possible de découpler les exigences d'horaire de lancement et de rendez-vous satellite-lune. En outre l'orbite elliptique étant parcourue seulement n fois avec n $\leq$ 4, il y a seulement un nombre n de passages inférieur à quatre dans les ceintures de Van Allen.

Le procédé selon l'invention permet, au prix d'un incrément de vitesse modéré, qui peut être obtenu à l'aide d'un système propulsif de faible puissance incorporé au satellite à placer en orbite, de réaliser des changements de plans orbitaux qui ne pourraient pas être réalisés directement à l'aide de systèmes de propulsion chimique en opérant un transfert classique, compte tenu de la nécessité de limiter la masse embarquée.

Le tableau 1 ci-dessous indique, en km/s, les incréments de vitesse nécessaires d'une part avec un transfert classique et d'autre part avec un transfert selon le procédé conforme à l'invention pour différents exemples de changement d'orbites dont les plans ne coïncident pas. Dans le transfert selon l'invention, on n'a pas fait apparaître l'incrément de vitesse fourni par la réaction de gravitation, qui par définition n'implique pas de consommation d'énergie embarquée, même s'il contribue pour une part substantielle à effectuer le transfert d'orbite.

Tableau 1

| Comparaison des incréments de vitesse en transfert classique et en transfert selon l'invention (en km/s) | | |
|---|---|---|
| | Transfert classique | Transfert selon l'invention |
| Orbite héliosynchrone/GSO | 6 | 3 + 1 |
| GTO/orbite héliosynchrone (ou orbite circulaire d'inclinaison quelconque) | 4.7 | 0,7 + 0,2 |

# EP 0 854 082 B1

Tableau 1   (suite)

| Comparaison des incréments de vitesse en transfert classique et en transfert selon l'invention (en km/s) | | |
|---|---|---|
| | Transfert classique | Transfert selon l'invention |
| Changement d'inclinaison de 60° (entre orbites circulaires basses) | 7.5 | 3 + 0,1 |
| GTO/orbite interplanétaire | 0.7 | 0,6 |

Selon un mode particulier de réalisation de l'invention, il est possible d'utiliser exclusivement la propulsion électrique pour placer un satellite en orbite géostationnaire à partir d'une orbite LTO. Dans ce cas, les expositions du satellite aux ceintures de Van Allen sont pratiquement éliminées. Au contraire, si l'on voulait effectuer avec des procédés classiques un passage direct d'une orbite de transfert géostationnaire GTO à une orbite géostationnaire GSO en utilisant la propulsion électrique, il serait nécessaire d'effectuer de nombreuses traversées des ceintures de Van Allen, ce qui est très pénalisant.

Le procédé selon l'invention permet non seulement d'utiliser un seul lanceur pour mettre en orbite deux satellites différents sur des orbites non coplanaires, mais permet aussi de lancer, outre un satellite B placé sur une orbite géostationnaire, une constellation de satellites A, C, D, E placés simultanément sur des orbites d'inclinaisons différentes. Dans ce cas, les satellites A, C, D, E sont lancés sur une orbite de transfert lunaire sensiblement équatoriale. Une correction à mi-course, effectuée séparément sur chaque satellite A, C, D, E permet de viser pour chaque satellite un point d'entrée différent dans la sphère d'influence lunaire qui produit un changement d'inclinaison différent.

Une deuxième correction à mi-course, sur la demi-orbite de retour, permet d'ajuster l'altitude de chaque périgée. L'orbite est circularisée par freinage atmosphérique et impulsion de correction comme dans le cas du satellite A mis en place selon le processus illustré sur la figure 3.

On peut remarquer d'une manière générale que pour passer d'une orbite de transfert géostationnaire à une orbite circulaire basse selon l'invention, le passage d'une orbite de transfert géostationnaire à une orbite de transfert lunaire, comme cela a déjà été souligné, introduit un supplément de vitesse à fournir par le lanceur très faible, de l'ordre de 700 m/s, bien que l'augmentation de l'altitude de l'apogée soit considérable ( de 36 000 km à 360 000 ou 380 000 km environ).

Par ailleurs, pour transformer une orbite elliptique en orbite circulaire basse, il n'est pas nécessaire de fournir un incrément de freinage important. Le freinage atmosphérique au périgée permet, par passages successifs dans la haute atmosphère, de réduire l'altitude de l'apogée avec une dépense minime d'ergols (qui n'est nécessaire que pour effectuer quelques impulsions de corrections). De plus, sous réserve de limiter le flux thermique à 6 kW/m$^2$ au cours du passage dans l'atmosphère, une protection thermique particulière n'est pas nécessaire.

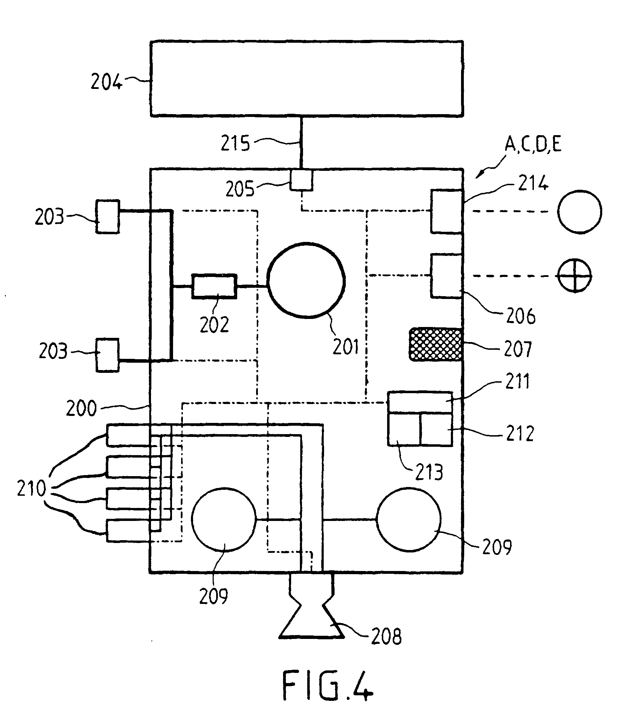

On décrira maintenant, en référence à la figure 4, un exemple de système de lancement de satellite permettant la mise en oeuvre de l'invention.

Un lanceur classique, qui n'a pas été représenté sur les dessins est associé à un premier satellite B et au moins à un deuxième satellite A, dont un exemple est représentée sur la figure 4. Le lanceur étant adapté pour placer pratiquement directement le premier satellite B sur son orbite finale, ce satellite B peut être tout à fait classique et ne comporte que des moyens propulsifs d'appoint destinés à fournir de petites impulsions de correction de trajectoire.

Le deuxième satellite A, qui doit pouvoir effectuer diverses manoeuvres après séparation du lanceur, avant de parvenir sur son orbite finale, comporte un calculateur de bord 211 associé à une horloge 212 et des moyens de traitement d'information 213 munis de mémoires et permettant de déterminer les éphémérides astronomiques pour permettre un pilotage autonome.

Le satellite A est équipé d'un système propulsif qui peut être de type chimique ou électrique. On a représenté sur la figure 4 le cas d'un satellite A comportant les deux types de systèmes propulsifs.

Ainsi, le corps du satellite 200 contient au moins un réservoir de xénon 201 alimentant par l'intermédiaire d'un ensemble détendeur/filtre/électrovannes 202 au moins deux propulseurs électriques 203 qui peuvent être du type ionique, à dérive fermée d'électrons ou encore de type arc jet. L'alimentation en puissance électrique est assurée par au moins un panneau solaire 204 alimentant le satellite par l'intermédiaire d'un bras 215 et d'un mécanisme tournant 205.

Le satellite peut avantageusement recevoir deux réflecteurs laser 207, situés sur deux faces opposées permettant de repérer très précisément la distance du satellite soit par rapport à la terre soit par rapport à la lune (qui comporte à sa surface des réflecteurs laser destinés à des expériences spatiales (missions APOLLO et LUNAKHOD)), ce qui permet de viser très précisément le corridor de passage dans la sphère d'influence lunaire ou encore le corridor d'entrée de freinage atmosphérique.

Le satellite peut en outre recevoir un système de propulsion chimique (par exemple à hydrazine ou bi-ergols) comprenant au moins un propulseur dont la poussée (de quelques centaines de newtons) permet de réaliser des incréments de vitesse quasi impulsionnels 208, un ou plusieurs réservoirs d'ergol 209 et des propulseurs de contrôle d'attitude 210 associés à des gyromètres.

Le satellite comporte en outre un senseur terrestre à champ variable 206 et au moins un senseur d'astre 214 (senseur solaire ou senseur stellaire) fournissant deux coordonnées angulaires.

Le senseur d'astre 214 et le senseur terrestre à champ variable 206 associés au tableau d'éphémérides inclus dans le calculateur de bord 211 permettent de calculer les angles entre le vecteur poussée et les directions terre-satellite et soleil-satellite, et donc de déterminer l'attitude du satellite A au cours des manoeuvres.

Les gyromètres contrôlent les propulseurs de contrôle d'attitude 210 qui assurent la rotation du corps du deuxième satellite pour orienter le propulseur principal 208 dans la direction visée.

Le calculateur de bord 211 contrôle les deux systèmes de propulsion.

En ce qui concerne le système de propulsion électrique, selon un premier mode de réalisation, le senseur d'horizon terrestre à champ variable 206 permet d'obtenir la position de la Terre, et des roues de réaction assurent l'attitude du satellite A. Le calculateur de bord 211 met en oeuvre une loi de pilotage des propulseurs électriques 203 qui consiste à stabiliser le vecteur poussée perpendiculaire à la direction Terre-satellite.

Selon un autre mode de réalisation, le senseur d'astre 214 et la table d'éphémérides incluse dans le calculateur de bord 211 permettent de déterminer l'attitude du satellite A. Des roues de réaction assurent l'attitude du satellite. Le calculateur de bord 211 met en oeuvre une loi de pilotage des propulseurs électriques 203 qui consiste à pointer le vecteur poussée selon une direction inertielle.

## Revendications

1. Procédé de lancement simultané de satellites sur des orbites non coplanaires, selon lequel on dispose un premier satellite (B) sur un lanceur adapté pour placer pratiquement directement ledit premier satellite (B) sur une première orbite finale présentant des premiers paramètres orbitaux avec une première valeur d'excentricité, une première valeur d'inclinaison et une première valeur d'apogée et on dispose sur le lanceur au moins un deuxième satellite (A, C, D, E) destiné à être placé sur une deuxième orbite finale présentant des deuxièmes paramètres orbitaux avec une deuxième valeur d'excentricité, une deuxième valeur d'inclinaison et une deuxième valeur d'apogée qui sont substantiellement différentes des valeurs correspondantes des premiers paramètres orbitaux fournis par le lanceur et appliqués au premier satellite (B) lancé simultanément avec le deuxième satellite (A, C, D, E), **caractérisé en ce que** pour la mise en place du deuxième satellite (A, C, D, E) on procède au cours d'une première manoeuvre à un transfert du deuxième satellite (A, C, D, E) sur une orbite d'attente fortement elliptique, dont l'apogée est situé typiquement entre 50 000 km et 400 000 km, dont le demi grand axe est orienté de manière à intercepter le tore formé par la sphère d'influence de la lune sur son orbite, et dont la période $T_A$ est calculée selon la formule :

$$nT_A + 0,5 \cdot T_{LTO} = t_{pl}$$

   avec n entier $\leq 4$

   où $T_{LTO}$ est la période de l'orbite de transfert lunaire, $t_{pl}$ est le temps entre la fin du lancement et le passage de la lune au point visé et n est le nombre de fois, inférieur à 4, que l'orbite d'attente fortement elliptique est parcourue par le deuxième satellite, on procède au cours d'une deuxième manoeuvre au périgée de ladite orbite fortement elliptique à un transfert du deuxième satellite sur l'orbite de transfert lunaire, on procède au cours d'une troisième manoeuvre à une correction à mi-course destinée à fixer précisément les paramètres d'entrée dans la sphère d'influence de la lune, lesdits paramètres d'entrée étant déterminés de telle manière qu'au cours d'une quatrième manoeuvre, des changements d'altitude du périgée et d'inclinaison d'une orbite intermédiaire sur laquelle se trouve le deuxième satellite (A, C, D, E) et visant à se rapprocher de ladite deuxième orbite finale soient obtenus majoritairement par réaction de gravitation dans la sphère d'influence de la lune, et on procède à une cinquième manoeuvre permettant de placer avec précision le deuxième satellite sur la deuxième orbite finale.

2. Procédé selon la revendication 1, **caractérisé en ce que** ladite première orbite finale sur laquelle est lancé le premier satellite (B) est constituée par une orbite basse altitude inclinée telle qu'une orbite héliosynchrone, et **en ce que** ladite cinquième manoeuvre est effectuée au périgée de l'orbite intermédiaire du deuxième satellite (A, C, D, E) en sortie de la sphère d'influence de la lune et consiste à abaisser l'apogée ou à circulariser ladite orbite intermédiaire en vue de transformer ladite orbite intermédiaire en ladite deuxième orbite finale constituée par une orbite géostationnaire.

**3.** Procédé selon la revendication 1, **caractérisé en ce que** ladite première orbite finale sur laquelle est lancé le premier satellite (B) est constituée par une orbite de transfert géostationnaire faiblement inclinée, ou orbite de transfert supergéostationnaire et **en ce que**, au cours de ladite troisième manoeuvre, la correction à mi-course est telle que les paramètres d'entrée dans la sphère d'influence de la lune permettent qu'après la réaction de gravitation dans la sphère d'influence de la lune, le périgée de l'orbite intermédiaire sur laquelle se trouve le deuxième satellite (A, C, D, E) soit situé à une altitude de 80 à 170 km, et **en ce que** la cinquième manoeuvre consiste, l'altitude du périgée étant fixée, à effectuer au moins un freinage atmosphérique pour abaisser l'apogée de l'orbite intermédiaire du deuxième satellite (A, C, D, E) en sortie de la sphère d'influence de la lune, puis, par une manoeuvre à l'apogée, à relever le périgée de manière à transformer ladite orbite intermédiaire en ladite deuxième orbite finale constituée par une orbite basse altitude inclinée ou circulaire basse inclinée.

**4.** Procédé selon la revendication 3, pour le lancement simultané d'une pluralité de deuxièmes satellites (A, C, D, E) sur des orbites finales constituées par des orbites à basses altitudes, notamment des orbites circulaires basses d'inclinaisons différentes tandis que le premier satellite (B) est placé sur une première orbite finale constituée par une orbite de transfert géostationnaire faiblement inclinée, ou une orbite de transfert supergéostationnaire, **caractérisé en ce qu'**au cours de la troisième manoeuvre, on procède à une série de corrections à mi-course différentes pour placer les différents deuxièmes satellites sur des points d'entrée différents dans la sphère d'influence lunaire, de façon à viser des inclinaisons différentes et par suite d'obtenir lors de la cinquième manoeuvre, après freinage atmosphérique, une série d'orbites à basses altitudes, notamment des orbites circulaires basses d'inclinaisons différentes pour les différents satellites de la pluralité de deuxièmes satellites (A, C, D, E).

**5.** Procédé selon la revendication 1, **caractérisé en ce que** le deuxième satellite (A, C, D, E) est équipé d'un calculateur de bord (211) et d'un système de propulsion chimique comprenant un propulseur principal (208) embarqué à bord dudit deuxième satellite (A, C, D, E) et des propulseurs de contrôle d'attitude (210).

**6.** Procédé selon la revendication 1, **caractérisé en ce que** le deuxième satellite (A, C, D, E) est équipé d'un calculateur de bord (211) et en outre d'un système de propulsion électrique comprenant au moins des propulseurs électriques à forte impulsion spécifique embarqués à bord dudit deuxième satellite (A, C, D, E), les propulseurs électriques (203) pouvant être du type ionique, arc jet ou à dérive fermée d'électrons.

**7.** Procédé selon la revendication 5, **caractérisé en ce que** ledit deuxième satellite (A, C, D, E) comprend un senseur d'astre (214), un senseur terrestre à champ variable (206) et un tableau d'éphémérides inclus dans le calculateur de bord (211) permettant de calculer les angles entre le vecteur poussée et les directions terre-satellite et soleil-satellite, et donc de déterminer l'attitude du deuxième satellite (A, C, D, E) au cours des manoeuvres.

**8.** Procédé selon la revendication 7, **caractérisé en ce que** ledit deuxième satellite (A, C, D, E) comprend en outre des gyromètres contrôlant les propulseurs de contrôle d'attitude (210) qui assurent la rotation du corps du deuxième satellite pour orienter le propulseur principal (208) dans la direction visée.

**9.** Procédé selon l'une quelconque des revendications 5 à 8, **caractérisé en ce que** le corps du deuxième satellite (A, C, D, E) est muni d'au moins deux rétro-réflecteurs laser (207) permettant d'obtenir de manière très précise par télémétrie laser la position de ce deuxième satellite (A, C, D, E) avant les manoeuvres de correction à mi-course de la troisième manoeuvre.

**10.** Procédé selon la revendication 6, **caractérisé en ce que** le deuxième satellite (A, C, D, E) comprend un senseur d'horizon terrestre à champ variable (206) pour obtenir la position de la Terre et des roues de réaction ou des roues cinétiques pour assurer l'attitude de ce deuxième satellite et **en ce que** le calculateur de bord (211 ) met en oeuvre une loi de pilotage des propulseurs électriques (203) qui consiste à stabiliser le vecteur poussée perpendiculaire à la direction Terre-satellite.

**11.** Procédé selon la revendication 6, **caractérisé en ce que** le deuxième satellite (A, C, D, E) comprend un senseur d'astre (214) ainsi qu'une table d'éphémérides incluse dans le calculateur de bord (211) pour déterminer l'attitude de ce deuxième satellite et des roues de réaction pour assurer l'attitude de ce deuxième satellite et **en ce que** le calculateur de bord (211) met en oeuvre une loi de pilotage des propulseurs électriques (203) qui consiste à pointer le vecteur poussée selon une direction inertielle.

**Claims**

1. A method of launching satellites simultaneously on non-coplanar orbits, in which a first satellite (B) is put on a launcher adapted to place said first satellite (B) practically directly on a first final orbit having first orbital parameters with a first eccentricity value, a first inclination value, and a first apogee value, and at least one second satellite (A, C, D, E) is put on the launcher for placing on a second final orbit having second orbital parameters with a second eccentricity value, a second inclination value, and a second apogee value which are substantially different from the corresponding values of the first orbital parameters supplied by the launcher and applied to the first satellite (B) launched simultaneously with the second satellite (A, C, D, E), the method being **characterised in that** to put the second satellite (A, C, D, E) into place: the second satellite (A, C, D, E) is transferred to a highly elliptical waiting orbit during a first manoeuvre, which orbit has its apogee typically situated in the range 50,000 km to 400,000 km, has a semi-major axis pointing so as to intercept the torus formed by the sphere of influence of the moon on its orbit, and has a period TA calculated to comply with the formula:

$$nT_A + \tfrac{1}{2}T_{LTO} = t_{pl}$$

with $\underline{n}$ integer $\leq 4$

where $T_{LTO}$ is the period of the lunar transfer orbit, $t_{pl}$ is the time between the end of launching and the passage of the moon at the aiming point, and $\underline{n}$ is the number of times, less than 4, that the second satellite travels round the highly elliptical waiting orbit; at the perigee of said highly elliptical orbit the second satellite is transferred during a second manoeuvre to the lunar transfer orbit; a mid-course correction is performed during a third manoeuvre to fix accurately the entry parameters into the sphere of influence of the moon; which entry parameters are determined so that during a fourth manoeuvre, changes are obtained in perigee altitude and in inclination of an intermediate orbit on which the second satellite (A, C, D, E) is to be found for the purpose of coming closer to said second final orbit, which changes are obtained mainly by gravitational reaction in the sphere of influence of the moon, and a fifth manoeuvre is performed to place the second satellite accurately on the second final orbit.

2. A method according to claim 1, **characterised in that** said first final orbit on which the first satellite (B) is launched is constituted by an inclined low altitude orbit such as a heliosynchronous orbit, and **in that** said fifth manoeuvre is performed at the perigee of the intermediate orbit of the second satellite (A, C, D, E) exiting the sphere of influence of the moon and consists in lowering apogee or in circularising said intermediate orbit in order to transform said intermediate orbit into said second final orbit constituted by a geostationary orbit.

3. A method according to claim 1, **characterised in that** said first final orbit on which the first satellite (B) is launched is constituted by a geostationary transfer orbit of low inclination, or a supergeostationary transfer orbit, and **in that**, during said third manoeuvre, the mid-course correction is such that the entry parameters into the sphere of influence of the moon make it possible, after gravitational reaction in the sphere of influence of the moon, for the perigee of the intermediate orbit on which the second satellite (A, C, D, E) is to be found to be situated at an altitude of 80 km to 170 km; and **in that** the fifth manoeuvre consists, on leaving the sphere of influence of the moon and with perigee altitude fixed, in performing atmospheric braking at least once to lower the apogee of the intermediate orbit of the second satellite (A, C, D, E); and then, by a manoeuvre at apogee, in raising its perigee so as to transform said intermediate orbit into said second final orbit constituted by an inclined low altitude orbit or an inclined low circular orbit.

4. A method according to claim 3, for launching a plurality of second satellites (A, C, D, E) simultaneously on final orbits constituted by low altitude orbits, in particular low circular orbits of different inclinations, while the first satellite (B) is placed on a first final orbit constituted by a geostationary transfer orbit of small inclination, or by a supergeostationary transfer orbit, the method being **characterised in that** during the third manoeuvre, a series of different mid-course corrections are performed to place the various second satellites on different entry points into the sphere of influence of the moon, so as to aim for different inclinations, and consequently obtain, during the fifth manoeuvre and after atmospheric braking, a series of low altitude orbits, in particular low circular orbits of different inclinations for the various satellites in the plurality of second satellites (A, C, D, E).

5. A method according to claim 1, **characterised in that** the second satellite (A, C, D, E) is fitted with an on-board computer (211), and a chemical thrust system comprising a main thruster (208) on board said second satellite (A, C, D, E) and attitude control thrusters (210).

**6.** A method according to claim 1, **characterised in that** the second satellite (A, C, D, E) is fitted with an on-board computer (211), and also an electrical thrust system comprising at least high specific impulse electrical thrusters on board said second satellite (A, C, D, E), which electrical thrusters (203) may be of the ion type, the arc jet type, or the closed electron drift type.

**7.** A method according to claim 5, **characterised in that** said second satellite (A, C, D, E) includes a star sensor (214), a variable field earth sensor (206), and an ephemeris table included in the on-board computer (211) enabling angles to be calculated between the thrust vector and the earth-satellite direction and the sun-satellite direction, and thus to determine the attitude of the second satellite (A, C, D, E) during the manoeuvres.

**8.** A method according to claim 7, **characterised in that** said second satellite (A, C, D, E) also includes gyros controlling the attitude control thrusters (210) to put the body of the second satellite into rotation for pointing the main thruster (208) in the aiming direction.

**9.** A method according to any one of claims 5 to 8, **characterised in that** the body of the second satellite (A, C, D, E) is provided with at least two laser retro-reflectors (207) making it possible to use laser telemetry to obtain very accurately the position of said second satellite (A, C, D, E) before the mid-course correction manoeuvres in the third manoeuvre.

**10.** A method according to claim 6, **characterised in that** the second satellite (A, C, D, E) includes a variable field earth horizon sensor (206) for obtaining the position of the earth, and reaction wheels for determining the attitude of said second satellite, and **in that** the on-board computer (211) implements a relationship for controlling the electrical thrusters (203) which consists in stabilizing the thrust vector perpendicularly to the earth-satellite direction.

**11.** A method according to claim 6, **characterised in that** the second satellite (A, C, D, E) includes a star sensor (214) and an ephemeris table included in the on-board computer (211) to determine the attitude of said second satellite, and reaction wheels for controlling the attitude of said second satellite, and **in that** the on-board computer (211) implements a control relationship for the electrical thrusters (203) which consists in pointing the thrust vector in an inertial direction.


**Patentansprüche**

**1.** Verfahren zum simultanen Befördern von Satelliten auf nicht-koplanare Umlaufbahnen, gemäß dem ein erster Satellit (B) an einer Trägerrakete angeordnet wird, welche dazu angepasst ist, den ersten Satelliten (B) praktisch direkt auf eine erste endgültige Umlaufbahn zu platzieren, die erste Orbital-Parameter mit einem ersten Exzentrizitätswert, einem ersten Inklinationswert und einem ersten Apogäumswert aufweist, und an der Trägerrakete wenigstens ein zweiter Satellit (A, C, D, E) angeordnet wird, der auf einer zweiten endgültigen Umlaufbahn angeordnet werden soll, die zweite Orbital-Parameter mit einem zweiten Exzerltrizitätswert, einem zweiten Inklinationswert und einem zweiten Apogäumswert aufweist, welche sich wesentlich von den entsprechenden Werten der ersten orbitalen Parameter unterscheiden, welche durch die Trägerrakete gegeben sind und auf den ersten, simultan mit dem zweiten Satelliten (A, C, D, E) beförderten Satelliten (B) bezogen sind,
**dadurch gekennzeichnet, dass**
der zweite Satellit (A, C, D, E) für das In-Stellung-bringen des zweiten Satelliten (A, C, D, E) während eines ersten Manövers auf eine stark elliptische Warte-Umlaufbahn gebracht wird, deren Apogäum sich typischerweise zwischen 50 000 km und 400 000 km befindet, deren große Halbachse derart angeordnet ist, dass sie den durch die Einflusssphäre des Mondes auf seiner Umlaufbahn gebildeten Torus schneidet, und deren Periode $T_A$ gemäß der Formel berechnet ist:

$$n\,T_A + 0,5\,T_{LTO} = t_{pl}$$

mit n ganzzahlig ≤ 4,
wobei $T_{LTO}$ die Periode der Mond-Transfer-Umlaufbahn ist, $t_{pl}$ die Zeit zwischen dem Ende der Beförderung und der Passage des Mondes am angestrebten Punkt ist und n die Anzahl der Male, kleiner als 4, die die stark elliptische Warte-Umlaufbahn von dem zweiten Satelliten durchlaufen wird, ist,
der zweite Satellit während eines zweiten Manövers am Perigäum der stark elliptischen Umlaufbahn auf die Mond-Transfer-Umlaufbahn gebracht wird,

während eines dritten Manövers eine Mittelkurskorrektur durchgeführt wird, um die Eintrittsparameter in die Einflusssphäre des Mondes genau festzulegen, wobei die Eintrittsparameter derart bestimmt sind, dass während eines vierten Manövers Änderungen der Höhe des Perigäums und der Inklination einer intermediären Umlaufbahn, auf der sich der zweite Satellit (A, C, D, E) befindet, und welche darauf abzielen, sich der zweiten, endgültigen Umlaufbahn zu nähern, hauptsächlich durch Gravitationsreaktion in der Einflusssphäre des Mondes erhalten werden, und

ein fünftes Manöver durchgeführt wird, welches ermöglicht, den zweiten Satelliten mit Präzision in die zweite endgültige Umlaufbahn zu platzieren.

2. Verfahren nach Anspruch 1, **dadurch gekennzeichnet, dass** die erste endgültige Umlaufbahn, auf die der erste Satellit (B) befördert wird, durch eine Umlaufbahn niedriger Höhe gebildet ist, welche wie eine heliosynchrone Umlaufbahn geneigt ist, und dass das fünfte Manöver am Perigäum der intermediären Umlaufbahn des zweiten Satelliten (A, C, D, E) beim Verlassen der Einflusssphäre des Mondes durchgeführt wird und aus dem Herabsetzen des Apogäums oder dem Zirkularisieren der intermediären Umlaufbahn besteht, um die intermediäre Umlaufbahn in die zweite endgültige Umlaufbahn umzuwandeln, welche durch eine geostationäre Umlaufbahn gebildet wird.

3. Verfahren nach Anspruch 1, **dadurch gekennzeichnet, dass** die erste endgültige Umlaufbahn, auf die der erste Satellit (B) befördert wird, durch eine schwach geneigte, geostationäre Transfer-Umlaufbahn .oder eine supergeostationäre Transfer-Umlaufbahn gebildet ist, und dass während des dritten Manövers die Mittelkurskorrektur derart ist, dass die Eintrittsparameter in die Einflusssphäre des Mondes ermöglichen, dass sich das Perigäum der intermediären Umlaufbahn, auf der sich der zweite Satellit (A, C, D, E) befindet, nach der Gravitationsreaktion in der Einflusssphäre des Mondes in einer Höhe von 80 bis 170 km befindet, und dass das fünfte Manöver, bei festgelegter Höhe des Perigäums, darin besteht, wenigstens eine atmosphärische Abbremsung durchzuführen, um das Apogäum der intermediären Umlaufbahn des zweiten Satelliten (A, C, D, E) bei Austritt aus der Einflusssphäre des Mondes abzusenken, dann, durch ein Manöver im Apogäum, das Perigäum derart anzuheben, dass die intermediäre Umlaufbahn in die zweite endgültige Umlaufbahn umgewandelt wird, welche durch eine geneigte Umlaufbahn niedriger Höhe oder eine zirkulare, niedrige geneigte Umlaufbahn gebildet ist.

4. Verfahren nach Anspruch 3, zum simultanen Befördern einer Mehrzahl zweiter Satelliten (A, C, D, E) auf endgültige Umlaufbahnen, welche durch Umlaufbahnen niedriger Höhe, insbesondere zirkuläre, niedrige Umlaufbahnen verschiedener Inklinationen, gebildet sind, wohingegen der erste Satellit (B) in einer ersten endgültigen Umlaufbahn platziert wird, welche durch eine schwach geneigte, geostationäre Transfer-Umlaufbahn oder eine supergeostationäre Transfer-Umlaufbahn gebildet ist, **dadurch gekennzeichnet, dass** während des dritten Manövers eine Serie verschiedener Mittelkurskorrekturen durchgeführt wird, um die verschiedenen zweiten Satelliten auf verschiedene Eintrittspunkte in die Einflusssphäre des Mondes derart zu platzieren, um auf verschiedene Inklinationen abzuzielen und daraufhin in dem fünften Manöver nach atmosphärischer Abbremsung eine Serie von Umlaufbahnen niedriger Höhen, insbesondere zirkulare, niedrige Umlaufbahnen verschiedener Neigungen, für die verschiedenen Satelliten der Mehrzahl zweiter Satelliten (A, C, D, E) zu erhalten.

5. Verfahren nach Anspruch 1, **dadurch gekennzeichnet, dass** der zweite Satellit (A, C, D, E) mit einem Bordrechner (211) und mit einem chemischen Antriebssystem, das einen Hauptantrieb (208), der an Bord des zweiten Satelliten (A, C, D, E) angeordnet ist, und Stellungssteuerungsantriebe (210) aufweist, ausgestattet ist.

6. Verfahren nach Anspruch 1, **dadurch gekennzeichnet, dass** der zweite Satellit (A, C, D, E) mit einem Bordrechner (211) und ferner mit einem elektrischen Antriebssystem ausgestattet ist, welches wenigstens elektrische Antriebe hoher spezifischer Impulse aufweist, welche an Bord des zweiten Satelliten (A, C, D, E) angeordnet sind, wobei die elektrischen Antriebe vom ionischen Typ, vom Lichtbogen-Typ oder vom Typ der geschlossenen Elektronendrift sein können.

7. Verfahren nach Anspruch 5, **dadurch gekennzeichnet, dass** der zweite Satellit (A, C, D, E) einen Sternsensor (214), einen Erdsensor (206) variablen Feldes und eine in dem Bordrechner (211) enthaltene Ephemeridentafel aufweist, welche ermöglicht, die Winkel zwischen dem Schubvektor und den Richtungen Erde-Satellit und Sonne-Satellit zu berechnen, und somit die Stellung des zweiten Satelliten (A, C, D, E) während der Manöver zu bestimmen.

8. Verfahren nach Anspruch 7, **dadurch gekennzeichnet, dass** der zweite Satellit (A, C, D, E) ferner Gyrometer aufweist, welche die Stellungssteuerungsantriebe (210) steuern, welche die Rotation des Körpers des zweiten Satelliten zum Orientieren des Hauptantriebes (208) in die angestebte Richtung gewährleisten.

9. Verfahren nach einem der Ansprüche 5 bis 8, **dadurch gekennzeichnet, dass** der Körper des zweiten Satelliten (A, C, D, E) mit wenigstens zwei Laser-Retroreflektoren (207) ausgestattet ist, welche ermöglichen, die Position des zweiten Satelliten (A, C, D, E) vor den Manövern der Mittelkurskorrektur des dritten Manövers auf sehr präzise Weise durch Laser-Telemetrie zu erhalten.

10. Verfahren nach Anspruch 6, **dadurch gekennzeichnet, dass** der zweite Satellit (A, C, D, E) einen Erdhorizont-Sensor (206) variablen Feldes, um die Position der Erde zu erhalten, und Reaktionsräder oder kinetische Räder, um die Stellung dieses zweiten Satelliten sicherzustellen, aufweist, und dass der Bordrechner (211) eine Gesetzmäßigkeit zum Steuern der elektrischen Antriebe (203) einsetzt, welche darin besteht, den Schubvektor senkrecht zur Richtung Erde-Satellit zu stabilisieren.

11. Verfahren nach Anspruch 6, **dadurch gekennzeichnet, dass** der zweite Satellit (A, C, D, E) einen Sternsensor (214) sowie eine in dem Bordrechner (211) enthaltene Ephemeridentafel zum Bestimmen der Stellung des zweiten Satelliten und Reaktionsräder zum Sicherstellen der Stellung dieses zweiten Satelliten aufweist, und dass der Bordrechner (211) eine Gesetzmäßigkeit zum Steuern der elektrischen Antriebe (203) einsetzt, welche darin besteht, den Schubvektor in einer Trägheitsrichtung auszurichten.

FIG.1A

FIG.1B

FIG.1C

FIG.1D

FIG.2

FIG.3

FIG.4